# EUROPEAN PATENT APPLICATION

(11) **EP 4 557 501 A1**
(43) Date of publication of application: **21.05.2025**
(21) Application number: 23907892.6
(22) Date of filing: 22.12.2023
(51) Int. Cl.: H01M 50/636, H01M 10/04, H01M 50/167

(54) **O-RING FOR ELECTROLYTE INJECTION AND METHOD FOR MANUFACTURING CYLINDRICAL BATTERY USING SAME**

(30) Priority: 23.12.2022 KR 20220183770
(71) Applicant: LG Energy Solution, Ltd., Seoul 07335 (KR)
(72) Inventor: LEE, Ja-Sool, Daejeon 34122 (KR); KIM, Hak-Kyun, Daejeon 34122 (KR); PARK, Kyeong-Hoon, Daejeon 34122 (KR); PARK, Pil-Kyu, Daejeon 34122 (KR); LEE, Je-Jun, Daejeon 34122 (KR); JUNG, Ji-Min, Daejeon 34122 (KR)
(74) Representative: Goddar, Heinz J.
(86) International application number: PCT/KR2023/021494
(87) International publication number: WO 2024/136609

(57) **Abstract**

Disclosed is an electrolyte injection O-ring and a cylindrical battery manufacturing method using the same. The electrolyte injection O-ring includes a body portion having an open top end and an open bottom end and defining a cavity along a central axis; and a diameter-enlarged portion extending from a lower portion of the body portion along a centrifugal direction and the central axis direction. The diameter-enlarged portion includes an outer circumference surrounding the central axis. The diameter-enlarged portion deforms elastically when pressure is applied in the axial direction, so that a diameter of the outer circumference increases in the centrifugal direction.

## Description

### TECHNICAL FIELD

The present application claims priority to Korean Patent Application No. 10-2022-0183770 filed on December 23, 2022 in the Republic of Korea, the disclosures of which are incorporated herein by reference.

The present disclosure relates to an electrolyte injection O-ring and a cylindrical battery manufacturing method using the same, and more specifically, to an electrolyte injection O-ring that may prevent an electrolyte from remaining in a beading portion, and a cylindrical battery manufacturing method using the same.

### BACKGROUND ART

A cylindrical battery includes an electrode assembly wound in a jelly-roll shape, a cylindrical can that accommodates the electrode assembly and is open at one end; and a cap assembly that seals the upper portion of the cylindrical can.

A beading portion is formed near the opening end of the cylindrical can as a support structure for installing the cap assembly. The beading portion has a groove structure indented to a certain depth along the outer circumference of the cylindrical can toward the central axis of the cylindrical can.

The edge of the cap assembly seats on the upper surface of the beading portion. A gasket is interposed between the upper surface of the beading portion and the edge of the cap assembly. The opening end of the cylindrical can is clamped in the central axis direction to press the edge of the cap assembly together with the gasket. Thereby, the open portion of the cylindrical can is tightly sealed by the cap assembly.

Since the electrolyte is injected before the cap assembly sealing process, the electrode assembly is inserted in advance inside the cylindrical can into which the electrolyte is to be injected. To prevent the electrolyte from being discharged to the outside during the electrolyte injection process, an electrolyte injection O-ring is attached to the upper portion of the cylindrical can.

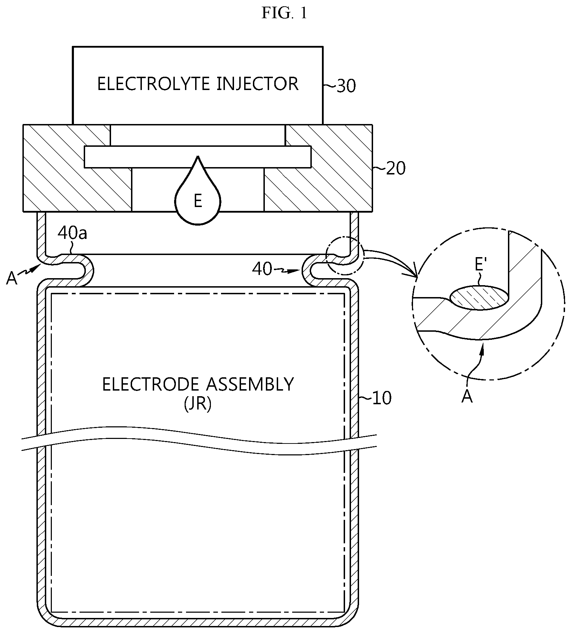

FIG. 1 is a cross-sectional view schematically showing a structure in which an electrolyte injection O-ring 20 is coupled to an upper portion of a cylindrical can 10 according to the prior art.

Referring to FIG. 1, the electrolyte injection O-ring 20 is in close contact with the top end of the cylindrical can 10. The upper portion of the electrolyte injection O-ring 20 is in close contact with the electrolyte injector 30. When an electrolyte E is injected from an electrolyte injector 30, the electrolyte E falls towards the electrode assembly JR by gravity and gradually permeates into the electrode assembly JR.

Some of droplets of the electrolyte E discharged from the electrolyte injector 30 may scatter toward the beading portion 40. Also, if the amount of electrolyte E discharged is relatively greater than the amount of electrolyte E permeating into the electrode assembly JR, the liquid level of the electrolyte E may rise to the upper portion of the beading portion 40.

A stepped portion (see 'A') may be formed at the corner where the beading portion 40 and the inner wall of the cylindrical can 10 meet. The stepped portion A may be unintentionally formed in the process of pressing the top end of the cylindrical can 10 in the direction of gravity to make the upper surface 40a of the beading portion 40 substantially parallel with the bottom surface of the cylindrical can 10.

For reference, if the upper surface 40a of the beading portion 40 is substantially parallel to the bottom surface of the cylindrical can 10, the edge of the cap assembly may be stably mounted on the upper surface of the beading portion 40.

The stepped portion A is a type of groove structure formed at the outer side of the upper surface 40a of the beading portion 40. The groove structure may extend in the circumferential direction, while forming a closed loop.

The scattering of the electrolyte E and the rise in the liquid level of the electrolyte E cause the electrolyte E' to remain in the stepped portion A of the beading portion 40 even after the electrolyte is completely injected.

The electrolyte E' remaining in the stepped portion A may be leaked to the outside of the cylindrical can 10 in the crimping process for mounting the cap assembly on the upper surface 40a of the beading portion 40 together with a gasket and then bending and fixing the top end of the cylindrical can 10, or in the sizing process for adjusting the height of the cylindrical can 10 to a designed height by pressing the crimping portion in the direction of gravity.

The electrolyte E' leaked to the outside may corrode the outer surface of the cylindrical can 10. Also, if the electrolyte E' leaked to the outside penetrates into the welded area of a bus bar, the welded area is corroded to increase the resistance of the welded area. Also, if the corrosion of the welded area is severe, the bus bar may be disconnected.

### DISCLOSURE

### Technical Problem

The present disclosure is designed to solve the problems of the related art, and therefore the present disclosure is directed to providing an electrolyte injection O-ring with an improved structure to prevent an electrolyte from remaining in a stepped portion of a beading portion even after the electrolyte injection process is completed.

The present disclosure is also directed to providing a cylindrical battery manufacturing method using the electrolyte injection O-ring with an improved structure.

### Technical Solution

In one aspect of the present disclosure, there is provided an electrolyte injection O-ring comprising a body portion having an open top end and an open bottom end and defining a cavity along a central axis; and a diameter-enlarged portion extending from a lower portion of the body portion along a centrifugal direction and the central axis direction.

The diameter-enlarged portion may include an outer circumference surrounding the central axis, and the diameter-enlarged portion may deform elastically when pressure is applied in the axial direction, so that a diameter of the outer circumference increases in the centrifugal direction.

The diameter-enlarged portion may have a first bottom surface extending from a bottom end of the outer circumference toward the central axis so as to be substantially perpendicular to the central axis.

The diameter-enlarged portion may include an inclined surface extending obliquely along the circumferential direction and the central axis direction from an outer circumference of the body portion.

The diameter-enlarged portion may include a first upper surface connecting the inclined surface and the outer circumference and substantially perpendicular to the central axis.

The body portion may have a second upper surface and a second bottom surface at the top end and the bottom end thereof, respectively.

The body portion may have a groove indented in the centrifugal direction on an inner circumference facing the cavity and extending along the circumferential direction.

The first bottom surface may be located outer than the second bottom surface in the centrifugal direction.

The diameter-enlarged portion may have a curved portion connecting the first bottom surface and the second bottom surface.

The outer circumference may include a protrusion protruding in the centrifugal direction and extending in the circumferential direction.

The protrusion may surround the central axis.

In another aspect of the present disclosure, there is also provided a cylindrical battery manufacturing method, comprising: (a) preparing a cylindrical can having an opening end at one end and a closed end at the other end; (b) inserting a jelly-roll type electrode assembly into the cylindrical can; (c) forming a beading portion having a groove shape press-fitted toward a central axis of the cylindrical can at a point spaced apart by a predetermined distance from the opening end of the cylindrical can; (d) installing the electrolyte injection O-ring described above at an inner side of the opening end of the cylindrical can, so that a bottom surface of the diameter-enlarged portion of the electrolyte injection O-ring faces the beading portion, and the outer circumference of the diameter-enlarged portion faces an inner circumference near the opening end; (e) coupling an electrolyte injector to an upper portion of the body portion of the electrolyte injection O-ring and pressing the electrolyte injection O-ring toward the electrode assembly; and (f) injecting an electrolyte into the cavity of the body portion through the electrolyte injector.

The groove shape of the beading portion may include an upper surface and a lower surface opposite to each other along the central axis direction. A stepped portion may be formed in an area where the upper surface of the beading portion meets the inner circumference of the cylindrical can between the beading portion and the opening end.

In the (e) step, as the diameter-enlarged portion is elastically deformed, an outer diameter of the outer circumference of the diameter-enlarged portion may increase in the centrifugal direction.

In the (e) step, the outer circumference of the diameter-enlarged portion may come into close contact with the inner circumference of the cylindrical can between the beading portion and the opening end.

In the (e) step, a protrusion provided on the outer circumference of the diameter-enlarged portion may be compressed by the inner circumference of the cylindrical can and is elastically deformed.

The cylindrical battery manufacturing method according to the present disclosure may further comprise: forming an opening at the closed end of the cylindrical can and installing a rivet terminal with a gasket interposed between the opening and the closed end; manufacturing a jelly-roll type electrode assembly by forming a stack having a separator interposed between a positive electrode and a negative electrode with an uncoated portion at a long side end and winding the stack in the long side direction, so that the uncoated portion of the positive electrode and the uncoated portion of the negative electrode are exposed to the outside of the separator through one end and the other end of the electrode assembly, respectively; bending the uncoated portion of the positive electrode toward a core of the electrode assembly to form a first bending surface region, and coupling a positive electrode current collection plate to the first bending surface region; bending the uncoated portion of the negative electrode toward the core of the electrode assembly to form a second bending surface region, and coupling a negative electrode current collection plate to the second bending surface region; inserting the electrode assembly into the cylindrical can such that an insulator is interposed between the positive electrode current collection plate and the closed end, and an edge of the negative electrode current collection plate is positioned at an upper portion of the beading portion; electrically connecting the positive electrode current collection plate and the rivet terminal; and electrically connecting the edge of the negative electrode current collection plate to an upper surface of the beading portion.

The negative electrode current collection plate may include a support portion disposed around the core; a plurality of uncoated portion coupling portions extending from the support portion and coupled to the second bending surface region; and a plurality of beading portion connection portions extend from the support portion toward the beading portion along the centrifugal direction and a winding axis direction and electrically connected to the upper portion of the beading portion.

The bottom surface of the diameter-enlarged portion may be simultaneously in close contact with the plurality of beading portion connection portions and the upper surface of the beading portion exposed between the beading portion connection portions adjacent in the circumferential direction.

The cylindrical battery manufacturing method according to the present disclosure may further comprise inserting a coupling O-ring between the electrolyte injection O-ring and the electrolyte injector, before executing the (e) step.

### Advantageous Effects

According to the present disclosure, when the electrolyte injection O-ring is pressed in the direction of gravity from the top by the electrolyte injector, the electrolyte injection O-ring comes into close contact with to the upper surface of the beading portion and a stepped portion at its outer portion, so it is possible to fundamentally prevent the electrolyte from remaining on the upper surface of the beading portion even after the electrolyte injection process is completed.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a cross-sectional view schematically showing a structure in which an electrolyte injection O-ring is coupled to an upper portion of a cylindrical can according to the prior art.
FIG. 2 is a perspective cross-sectional view showing a structure of an electrolyte injection O-ring according to an embodiment of the present disclosure.
FIG. 3 is a cross-sectional view showing the structure of the electrolyte injection O-ring according to an embodiment of the present disclosure.
FIG. 4 is a process diagram to explain a cylindrical battery manufacturing method according to an embodiment of the present disclosure.
FIG. 5 is a process diagram showing a cylindrical battery manufacturing method according to a preferred embodiment of the present disclosure.
FIG. 6 is a process diagram showing a case where the embodiment according to the present disclosure is applied to a cylindrical battery with a form factor of 4680.
FIG. 7 is a plan view showing a structure of a positive electrode current collection plate according to an embodiment of the present disclosure.
FIG. 8 is a perspective view showing a structure of a negative electrode current collection plate according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Although the terms first, second or the like are used to describe different elements, these elements are not limited by the terms. These terms are used to distinguish one element from another, and unless stated to the contrary, a first element may be a second element.

Throughout the specification, unless stated otherwise, each element may be singular or plural.

Hereinafter, when an element is "above (or under)" or "on (or below)" another element, the element can be on an upper surface (or a lower surface) of the other element, and intervening elements may be present between the element and the other element on (or below) the element.

Additionally, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

Singular expressions used in this specification include plural expressions unless the context clearly indicates otherwise. In this application, terms such as "including" or "comprising" should not be construed as necessarily including all of the various components or steps described in the specification, and it should be construed that some of the components or some of the steps may not be included, or additional components or steps may be further included.

Also, singular expressions used in this specification include plural expressions unless the context clearly indicates otherwise. In this application, terms such as "including" or "comprising" should not be construed as necessarily including all of the various components or steps described in the specification, and it should be construed that some of the components or some of the steps may not be included, or additional components or steps may be further included.

Throughout the specification, "A and/or B" refers to either A or B or both A and B unless expressly stated otherwise, and "C to D" refers to C or greater and D or smaller unless expressly stated otherwise.

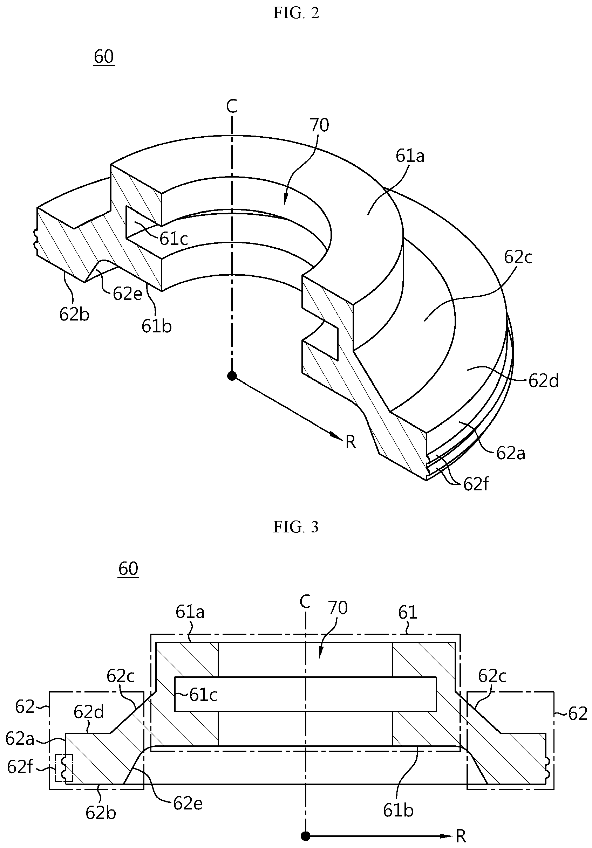

FIG. 2 is a perspective cross-sectional view showing a structure of an electrolyte injection O-ring 60 according to an embodiment of the present disclosure, and FIG. 3 is a cross-sectional view showing the structure of the electrolyte injection O-ring 60 according to an embodiment of the present disclosure.

Referring to FIGS. 2 and 3, the electrolyte injection O-ring 60 according to an embodiment of the present disclosure may include a body portion 61 having an open top end and an open bottom end and defining a cavity 70 along a central axis C, and a diameter-enlarged portion 62 extending from a lower outer circumference of the body portion 61 along a centrifugal direction R and the central axis C direction. Here, the centrifugal direction R means a direction away from the central axis C. The body portion 61 may have a tube shape surrounding the central axis C.

The diameter-enlarged portion 62 may include an outer circumference 62a surrounding the central axis C and a first bottom surface 62b extending from the bottom end of the outer circumference 62a toward the central axis C so as to be substantially perpendicular to the central axis C.

The diameter-enlarged portion 62 may include an inclined surface 62c extending obliquely along the centrifugal direction R and the central axis C direction from the outer circumference of the body portion 61.

The diameter-enlarged portion 62 may include a first upper surface 62d that connects the inclined surface 62c and the outer circumference 62a and is substantially perpendicular to the central axis C.

The first bottom surface 62b and the first upper surface 62d may have an annular shape.

In a modification, the inclined surface 62c may extend continuously from the bottom end of the outer circumference of the body portion 61 to the top end of the outer circumference 62a of the diameter-enlarged portion 62. In this case, the diameter-enlarged portion 62 may not include the first upper surface 62d.

The body portion 61 may have a second upper surface 61a and a second bottom surface 61b at the top end and the bottom end thereof, respectively. The second upper surface 61a and the second bottom surface 61b are substantially parallel and may be perpendicular to the central axis C. The widths of the second upper surface 61a and the second bottom surface 61b may be the same, or one side may have a relatively larger width than the other side. The second upper surface 61a and the second bottom surface 61b may have an annular shape.

The body portion 61 may have a groove 61c indented in the centrifugal direction R on the inner circumference facing the cavity 70 and extending along the circumferential direction. The groove 61c may surround the central axis C. The cross-sectional shape of the groove 61c may be approximately rectangular. The groove 61c may be used to install an O-ring for coupling an electrolyte injector (not shown) and the electrolyte injection O-ring 60. If the electrolyte injector is directly coupled to the second upper surface 61a, the structure of the groove 61c may be omitted.

The first bottom surface 62b may be located outer than the second bottom surface 61b in the centrifugal direction R. The first bottom surface 62b may be located below the second bottom surface 61b in the central axis C direction.

The diameter-enlarged portion 62 may include a curved portion 62e that smoothly connects the first bottom surface 62b and the second bottom surface 61b. The curved portion 62e functions to distribute the stress, which is generated when the diameter-enlarged portion 62 is elastically deformed in the centrifugal direction R by pressure applied from the top to the bottom, in the circumferential direction, the centrifugal direction R, and the axial direction C.

The outer circumference 62a may include a protrusion 62f, which protrudes in the centrifugal direction R. At least one protrusion 62f may be provided. The protrusion 62f may be compressed into close contact with the inner circumference between the beading portion 40 of the cylindrical can 10 and the top end of the cylindrical can 10 when the diameter-enlarged portion 62 moves in the centrifugal direction R by pressure applied from the top to the bottom. The protrusion 62f may have an annular shape surrounding the central axis C.

The electrolyte injection O-ring 60 may be made of a material that does not react with electrolyte and having insulating and elastic properties. In one example, the electrolyte injection O-ring 60 may be made of a rubber material such as silicone.

The electrolyte injection O-ring 60 may be pressed from top to bottom along the central axis C while the first bottom surface 62b is in contact with a horizontal surface of a predetermined structure. In this case, while the shape of the diameter-enlarged portion 62 elastically deforms due to pressure, the diameter of the outer circumference 62a may increase in the centrifugal direction R. Then, the outer circumference 62a may be brought into close contact with a vertical plane that is substantially perpendicular to the horizontal plane. Through this, it is possible to fundamentally block the phenomenon of electrolyte being introduced through the interface between the outer circumference 62a and the vertical surface and the interface between the first bottom surface 62b and the horizontal surface.

Hereinafter, the cylindrical battery manufacturing method using the above-described electrolyte injection O-ring 60 will be described.

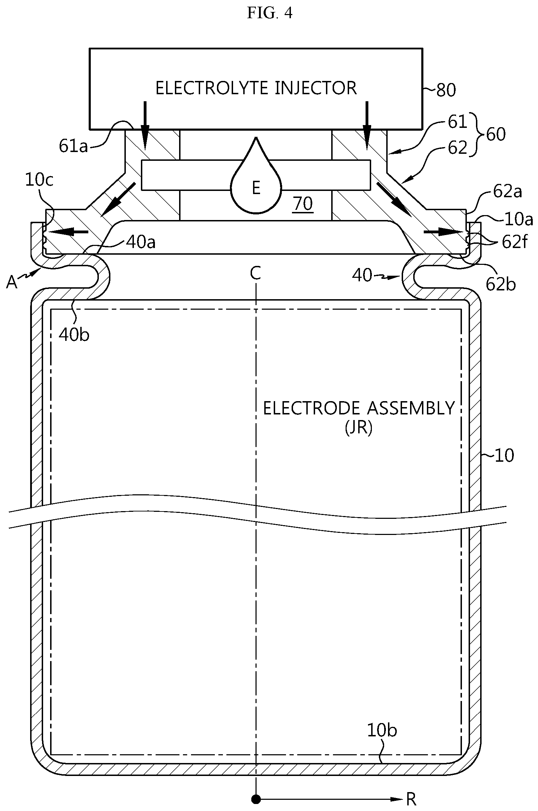

FIG. 4 is a process diagram to explain a cylindrical battery manufacturing method according to an embodiment of the present disclosure.

The cylindrical battery manufacturing method according to an embodiment of the present disclosure includes an electrolyte injection process using the electrolyte injection O-ring 60.

Referring to FIG. 4, first, a cylindrical can 10 having an opening end 10a at one end and a closed end 10b at the other end is prepared.

Next, a jelly-roll type electrode assembly JR is inserted into the cylindrical can 10. The method of manufacturing the electrode assembly JR will be described later.

Next, a beading portion 40 having a groove shape indented toward the central axis C of the cylindrical can 10 is formed at a point away from the opening end 10a of the cylindrical can 10 by a predetermined distance. The method of forming the beading portion 40 is widely known in the art, and thus will not be described in detail here.

The groove shape of the beading portion 40 may include an upper surface 40a and a lower surface 40 opposite to each other along the central axis C direction of the electrode assembly JR. A stepped portion A may be provided at a location where the inner circumference 10c of the cylindrical can 10 located between the beading portion 40 and the opening end 10a meets the upper surface 40a of the beading portion 40. The stepped portion A may not be formed depending on the method of forming the beading portion 40.

Next, the electrolyte injection O-ring 60 described above is installed at the opening end 10a of the cylindrical can 10.

The electrolyte injection O-ring 60 is installed so that the first bottom surface 62b of the diameter-enlarged portion 62 comes into contact with the beading portion 40, and the outer circumference 62a of the diameter-enlarged portion 62 faces the inner circumference 10c of the cylindrical can 10 near the opening end 10a.

Next, an electrolyte injector 80 is coupled to the second upper surface 61a of the body portion 61, and the electrolyte injection O-ring 60 is pressed toward the electrode assembly JR. The pressing direction may be parallel to the central axis C of the cylindrical can 10.

If the electrolyte injection O-ring 60 is pressed in the central axis C direction, the first bottom surface 62b comes into close contact with the upper surface 40a of the beading portion 40. Also, as the shape of the diameter-enlarged portion 62 elastically deforms due to pressure, the diameter of the outer circumference 62a may increase in the centrifugal direction R. Then, the outer circumference 62a of the diameter-enlarged portion 62 may come into close contact with the inner circumference 10c of the cylindrical can 10 located between the beading portion 40 and the opening end 10a. For reference, the arrow depicted inside the electrolyte injection O-ring 60 indicates a direction in which force is transmitted when the electrolyte injection O-ring 60 is pressed in the central axis C direction.

If the diameter-enlarged portion 62 of the electrolyte injection O-ring 60 has a protrusion 62f, when the electrolyte injection O-ring 60 is pressed, the protrusion 62f may also be compressed and elastically deformed. Then, the adhesion between the outer circumference 62a of the diameter-enlarged portion 62 and the inner circumference 10c of the cylindrical can 10 may be further improved.

Subsequently, an electrolyte E may be injected into the cavity 70 of the body portion 61 through the electrolyte injector 80.

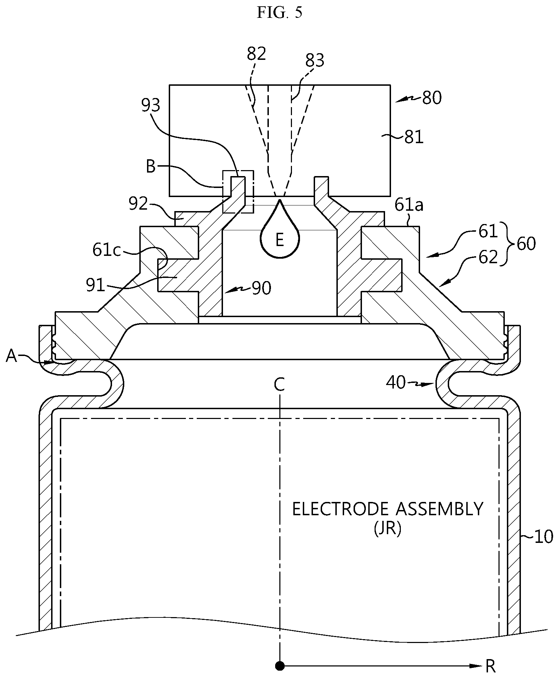

FIG. 5 is a process diagram showing a cylindrical battery manufacturing method according to a preferred embodiment of the present disclosure.

Referring to FIG. 5, the cylindrical battery manufacturing method according to the present disclosure may further include the step of interposing a coupling O-ring 90 between the electrolyte injection O-ring 60 and the electrolyte injector 80.

The coupling O-ring 90 is a member that assists in the tight coupling of the electrolyte injection O-ring 60 and the electrolyte injector 80. The coupling O-ring 90 may include a protrusion 91 engaged with the groove 61c of the body portion 61. The protrusion 91 may have an annular shape surrounding the central axis C. The coupling O-ring 90 may include a flange portion 92 extending in the centrifugal direction R along the second upper surface 61a and a coupling protrusion 93 extending upward from the inner side of the flange portion 92.

The electrolyte injector 80 may include a nozzle block 81 closely coupled to the upper portion of the coupling O-ring 90, an electrolyte injection nozzle 83 provided within the nozzle block 81, a guide groove 82 that guides the vertical movement of the electrolyte injection nozzle 83, and a groove (see 'B') into which the protrusion 93 of the coupling O-ring 90 is engaged.

The electrolyte injection nozzle 83 may move up and down by a linear movement mechanism. The outer circumference of the electrolyte injection nozzle 83 has a shape corresponding to the inner circumference of the guide groove 82. The guide groove 82 may have a tapered shape with a cross-sectional area decreasing along the central axis C. After the nozzle block 81 and the coupling O-ring 90 are coupled to each other through the protrusion/groove engagement, the electrolyte injection nozzle 83 may move from the top to the bottom and come into close contact with the lower portion of the guide groove 82. In this state, the electrolyte injection nozzle 83 may inject the electrolyte E to the upper portion of the electrode assembly JR while in close contact with the guide groove 82.

The above-described cylindrical battery manufacturing method may be applied to manufacture a cylindrical battery with a form factor of 4680 (diameter: 46 mm, height: 80 mm). However, the present disclosure is not limited by the form factor.

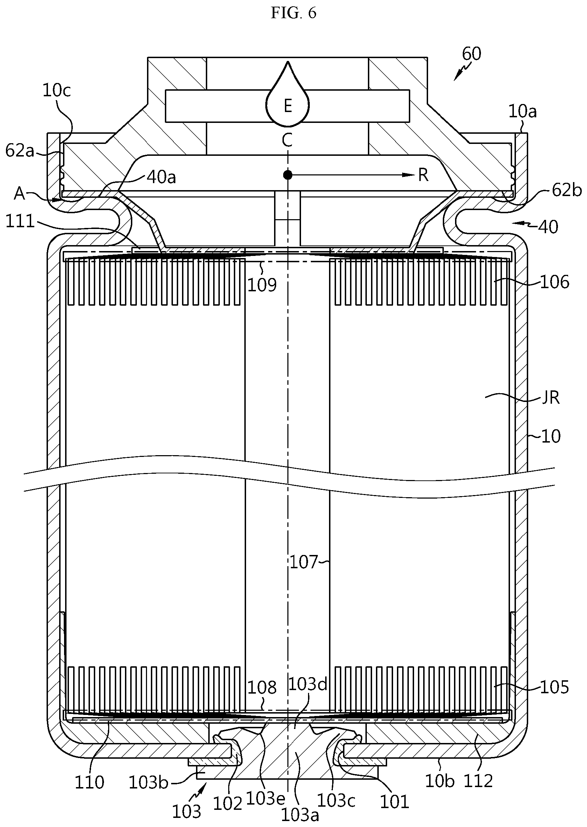

FIG. 6 is a process diagram showing a case where the embodiment according to the present disclosure is applied to a cylindrical battery with a form factor of 4680.

Referring to FIG. 6, first, an opening 101 is formed at the closed end 10b of the cylindrical can 10. The location of the opening 101 may be the center of the closed end 10b. Then, a rivet terminal 103 is installed while interposing a gasket 102 between the opening 101 and the closed end 10b.

The rivet terminal 103 may include a body portion 103a located within the opening 101, an outer flange portion 103b extending from the bottom end of the body portion 103a in the centrifugal direction R along the outer circumference of the closed end 10b, and an inner flange portion 103c bent from a top end edge of the body portion 103a through plastic processing toward the inner surface of the closed end 10b, and a welding portion 103d provided at the inner side of the inner flange portion 103c. An annular recess groove 103e may be provided between the welding portion 103d and the inner flange portion 103c.

Next, a positive electrode, a negative electrode, and a separator are prepared to manufacture the electrode assembly JR included in a 4680 cylindrical battery. The negative electrode and the positive electrode have a sheet shape with long sides and short sides, respectively. The negative electrode and the positive electrode have an uncoated portion without an active material at a long side end. The uncoated portion may be divided into a plurality of segments. The segment may have the shape of a rectangular, trapezoid, parallelogram, or the like.

Next, a stack is constructed with a separator interposed between the positive electrode and the negative electrode having an uncoated portion at the long side end, and the stack is wound in the long side direction to manufacture a jelly-roll type electrode assembly JR. The stack may have a structure in which a positive electrode, a separator, a negative electrode, and a separator are sequentially stacked. On the contrary, the stack may also have a structure in which a negative electrode, a separator, a positive electrode, and a separator are sequentially stacked.

Preferably, when the electrode assembly JR is wound, the positive electrode and the negative electrode are arranged so that the uncoated portion 105 of the positive electrode and the uncoated portion 106 of the negative electrode face each other along the central axis C. Also, when the electrode assembly JR is wound, the uncoated portion 105 of the positive electrode and the uncoated portion 106 of the negative electrode are exposed to the outside of the separator through one end and the other end of the electrode assembly JR.

Next, the end of the positive electrode uncoated portion 105 is bent toward the core 107 of the electrode assembly JR to form a first bending surface region 108. Similarly, the end of the negative electrode uncoated portion 106 is bent toward the core 107 of the electrode assembly JR to form a second bending surface region 109. When the first bending surface region 108 and the second bending surface region 109 are formed, uncoated portions are overlapped and stacked in the central axis C direction. When the positive electrode uncoated portion 105 and the negative electrode uncoated portion 106 are divided into a plurality of segments, the flatness of the first bending surface region 108 and the second bending surface region 109 may be improved. In addition, it is possible to prevent the uncoated portions from being abnormally distorted due to excessive bending stress below the first bending surface region 108 and the second bending surface region 109.

Subsequently, the positive electrode current collection plate 110 is coupled to the first bending surface region 108, and the negative electrode current collection plate 111 is coupled to the second bending surface region 109. The structures of the positive electrode current collection plate 110 and the negative electrode current collection plate 111 will be described later.

Next, the electrode assembly JR to which the positive electrode current collection plate 110 and the negative electrode current collection plate 111 are coupled is inserted into the cylindrical can 10. At this time, the direction of the electrode assembly JR is determined so that the positive electrode current collection plate 110 faces the rivet terminal 103. Also, an insulator 112 is interposed between the positive electrode current collection plate 110 and the inner surface of the closed end 10b. The insulator 112 provides electrical insulation between the cylindrical can 10 and the positive electrode current collection plate 110. Also, if the electrode assembly JR is inserted into the cylindrical can 10, the structure of the negative electrode current collection plate 111 may be designed so that the edge of the negative electrode current collection plate 111 comes into contact with the upper surface 40a of the beading portion 40.

Next, the positive electrode current collection plate 110 and the rivet terminal 103 are electrically connected. As an example, the positive electrode current collection plate 110 and the welding portion 103d of the rivet terminal 103 are welded together through the core 107 of the electrode assembly JR. Also, the edge of the negative electrode current collection plate 111 is electrically connected to the upper surface 40a of the beading portion 40. As an example, at least a part of the edge of the negative electrode current collection plate 111 is welded to the upper surface 40a of the beading portion 40. Laser welding, resistance welding, or ultrasonic welding may be applied as welding methods.

Next, the electrolyte injection O-ring 60 is inserted through the opening end 10a of the cylindrical can 10. The outer circumference 62a of the diameter-enlarged portion 62 of the electrolyte injection O-ring 60 faces the inner surface 10c of the cylindrical can 10 located between the opening end 10a and the beading portion 40, and the first bottom surface 62b comes into contact with the edge of the negative electrode current collection plate 111 that is electrically connected to the upper surface 40a of the beading portion 40.

Next, as in the above-described electrolyte injection, an electrolyte E may be injected into the cylindrical can 10 using the electrolyte injector 80 in a state where the electrolyte injection O-ring 60 is pressed in the central axis C direction. Preferably, a coupling O-ring 90 may be interposed between the electrolyte injector 80 and the electrolyte injection O-ring 60.

If the electrolyte injection O-ring 60 is pressed, the diameter-enlarged portion 62 is elastically deformed, and the diameter of the outer circumference 62a of the diameter-enlarged portion 62 increases in the centrifugal direction R.

The first bottom surface 62b of the diameter-enlarged portion 62 comes into contact with the edge portion of the negative electrode current collection plate 111 coupled to the upper surface 40a of the beading portion 40 and the upper surface 40a of the beading portion 40 exposed between the edge portions of the negative electrode current collection plates 111 adjacent in the circumferential direction, and presses them in the central axis C direction. Also, the outer circumference 62a of the diameter-enlarged portion 62 comes into close contact with the inner surface 10c located between the opening end 10a of the cylindrical can 10 and the beading portion 40.

Therefore, while the electrolyte is injected into the cylindrical can 10, it is possible to fundamentally prevent the electrolyte from penetrating to the upper surface 40a of the beading portion 40 and remaining on the upper surface 40a of the beading portion 40, especially the stepped portion A of the upper surface 40a, after the electrolyte is injected.

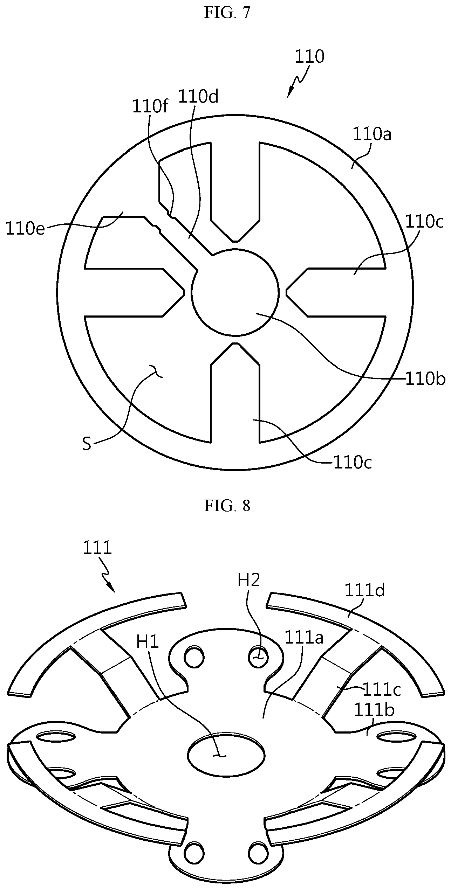

FIG. 7 is a plan view showing a structure of a positive electrode current collection plate 110 according to an embodiment of the present disclosure.

Referring to FIGS. 6 and 7, the positive electrode current collection plate 110 according to an embodiment of the present disclosure includes a rim portion 110a defining an empty space S at an inner inside, and a terminal coupling portion 110b coupled to the welding portion 103d of the rivet terminal 103 at the inner side of the rim portion 110a, a plurality of uncoated portion coupling portions 110c extending from the inner side of the rim portion 110a toward the central axis C of the electrode assembly JR and coupled to the first bending surface region 108, and a bridge portion 110d connecting the rim portion 110a and the terminal coupling portion 110b.

Optionally, the positive electrode current collection plate 110 may further include a taper portion 110e provided at the boundary area between the rim portion 110a and the bridge portion 110d and/or a notching portion 110f in which a cross section of the bridge portion 110d is reduced to locally increase resistance.

The taper portion 110e may be used as a part for gripping the positive electrode current collection plate 110 during the process of welding the positive electrode current collection plate 110 or the process of transferring the electrode assembly JR to which the positive electrode current collection plate 110 is coupled.

The notching portion 110f locally increases the resistance of the corresponding region. Therefore, the notching portion 110f may function as a fuse that irreversibly melts and cuts the bridge portion 110d when an overcurrent flows through the bridge portion 110d.

The positive electrode current collection plate 110 has strong resistance to vibration applied from the outside because the terminal coupling portion 110b and the plurality of uncoated portion coupling portions 110c are separated from each other.

FIG. 8 is a perspective view showing a structure of a negative electrode current collection plate 111 according to an embodiment of the present disclosure.

Referring to FIGS. 6 and 8, the negative electrode current collection plate 111 according to an embodiment of the present disclosure includes a support portion 111a disposed on the second bending surface region 109 of the electrode assembly JR, a plurality of uncoated portion coupling portions 111b extending in the centrifugal direction R from one side of the support portion 111a and coupled to the second bending surface region 109, a connection portion 111c extending obliquely in the axial direction C and the centrifugal direction R from the other side of the support portion 111a, and a beading portion connection portion 111d extending from the end of the connection portion 111c in the circumferential direction along the upper surface 40a of the beading portion 40 and electrically connected to the upper surface 40a of the beading portion 40.

The connection portion 111c may be bent at the middle bent point. The angle formed by the connection portion 111c with respect to the support portion 111a may be changed based on the bent point. The angle of the connection portion 111c located below the bent point may be larger than the angle of the connection portion 111c located above the bent point. This angle design helps the beading portion connection portion 111d to stably contact the upper surface 40a of the beading portion 40.

The support portion 111a may have a first hole H1 formed in the center portion to communicate with the core 107 of the electrode assembly JR, and the uncoated portion coupling portion 111b may have a second hole H2 at the outer side. The first hole H1 and the second hole H2 are provided to improve the impregnation of electrolyte.

According to the present disclosure, when the electrolyte injection O-ring 60 is pressed in the direction of gravity from the top by the electrolyte injector 80, the electrolyte injection O-ring 60 is closely adhered to the upper surface 40a of the beading portion 40 and the stepped portion A at its outer side, so it is possible to prevent the electrolyte from remaining on the upper surface 40a of the beading portion 40, especially the stepped portion A, even after the electrolyte injection process is completed. As a result, external leakage of electrolyte may be prevented during the process of crimping the cap assembly or the process of sizing the cylindrical can, thereby effectively preventing the cylindrical can or the bus bar welding portion from being corroded.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. An electrolyte injection O-ring, comprising:
a body portion having an open top end and an open bottom end and defining a cavity along a central axis; and
a diameter-enlarged portion extending from a lower portion of the body portion along a centrifugal direction and the central axis direction,
wherein the diameter-enlarged portion includes an outer circumference surrounding the central axis, and
wherein the diameter-enlarged portion deforms elastically when pressure is applied in the axial direction, so that a diameter of the outer circumference increases in the centrifugal direction.

2. The electrolyte injection O-ring according to claim 1,
wherein the diameter-enlarged portion has a first bottom surface extending from a bottom end of the outer circumference toward the central axis so as to be substantially perpendicular to the central axis.

3. The electrolyte injection O-ring according to claim 1,
wherein the diameter-enlarged portion includes an inclined surface extending obliquely along the circumferential direction and the central axis direction from an outer circumference of the body portion.

4. The electrolyte injection O-ring according to claim 3,
wherein the diameter-enlarged portion includes a first upper surface connecting the inclined surface and the outer circumference and substantially perpendicular to the central axis.

5. The electrolyte injection O-ring according to claim 1,
wherein the body portion has a second upper surface and a second bottom surface at the top end and the bottom end, respectively.

6. The electrolyte injection O-ring according to claim 5,
wherein the body portion has a groove indented in the centrifugal direction on an inner circumference facing the cavity and extending along the circumferential direction.

7. The electrolyte injection O-ring according to claim 5,
wherein the first bottom surface is located outer than the second bottom surface in the centrifugal direction.

8. The electrolyte injection O-ring according to claim 7,
wherein the diameter-enlarged portion has a curved portion connecting the first bottom surface and the second bottom surface.

9. The electrolyte injection O-ring according to claim 1,
wherein the outer circumference includes a protrusion protruding in the centrifugal direction and extending in the circumferential direction.

10. A cylindrical battery manufacturing method, comprising:
(a) preparing a cylindrical can having an opening end at one end and a closed end at the other end;
(b) inserting a jelly-roll type electrode assembly into the cylindrical can;
(c) forming a beading portion having a groove shape press-fitted toward a central axis of the cylindrical can at a point spaced apart by a predetermined distance from the opening end of the cylindrical can;
(d) installing the electrolyte injection O-ring according to any one of claims 1 to 9 at an inner side of the opening end of the cylindrical can, so that a bottom surface of the diameter-enlarged portion of the electrolyte injection O-ring faces the beading portion, and the outer circumference of the diameter-enlarged portion faces an inner circumference near the opening end;
(e) coupling an electrolyte injector to an upper portion of the body portion of the electrolyte injection O-ring and pressing the electrolyte injection O-ring toward the electrode assembly; and
(f) injecting an electrolyte into the cavity of the body portion through the electrolyte injector.

11. The cylindrical battery manufacturing method according to claim 10,
wherein the groove shape of the beading portion includes an upper surface and a lower surface opposite to each other along the central axis direction, and
wherein a stepped portion is formed in an area where the upper surface of the beading portion meets the inner circumference of the cylindrical can between the beading portion and the opening end.

12. The cylindrical battery manufacturing method according to claim 10,
wherein in the (e) step, as the diameter-enlarged portion is elastically deformed, an outer diameter of the outer circumference of the diameter-enlarged portion increases in the centrifugal direction.

13. The cylindrical battery manufacturing method according to claim 12,
wherein in the (e) step, the outer circumference of the diameter-enlarged portion comes into close contact with the inner circumference of the cylindrical can between the beading portion and the opening end.

14. The cylindrical battery manufacturing method according to claim 13,
wherein in the (e) step, a protrusion provided on the outer circumference of the diameter-enlarged portion is compressed by the inner circumference of the cylindrical can and is elastically deformed.

15. The cylindrical battery manufacturing method according to claim 10, further comprising:
forming an opening at the closed end of the cylindrical can and installing a rivet terminal with a gasket interposed between the opening and the closed end;
manufacturing a jelly-roll type electrode assembly by forming a stack having a separator interposed between a positive electrode and a negative electrode with an uncoated portion at a long side end and winding the stack in the long side direction, so that the uncoated portion of the positive electrode and the uncoated portion of the negative electrode are exposed to the outside of the separator through one end and the other end of the electrode assembly, respectively;
bending the uncoated portion of the positive electrode toward a core of the electrode assembly to form a first bending surface region, and coupling a positive electrode current collection plate to the first bending surface region;
bending the uncoated portion of the negative electrode toward the core of the electrode assembly to form a second bending surface region, and coupling a negative electrode current collection plate to the second bending surface region;
inserting the electrode assembly into the cylindrical can such that an insulator is interposed between the positive electrode current collection plate and the closed end, and an edge of the negative electrode current collection plate is positioned at an upper portion of the beading portion;
electrically connecting the positive electrode current collection plate and the rivet terminal; and
electrically connecting the edge of the negative electrode current collection plate to an upper surface of the beading portion.

16. The cylindrical battery manufacturing method according to claim 15,
wherein the negative electrode current collection plate includes:
a support portion disposed around the core;
a plurality of uncoated portion coupling portions extending from the support portion and coupled to the second bending surface region; and
a plurality of beading portion connection portions extended from the support portion toward the beading portion along the centrifugal direction and a winding axis direction and electrically connected to the upper portion of the beading portion.

17. The cylindrical battery manufacturing method according to claim 16,
wherein the bottom surface of the diameter-enlarged portion is simultaneously in close contact with the plurality of beading portion connection portions and the upper surface of the beading portion exposed between the beading portion connection portions adjacent in the circumferential direction.

18. The cylindrical battery manufacturing method according to claim 16, before executing the (e) step, further comprising:
inserting a coupling O-ring between the electrolyte injection O-ring and the electrolyte injector.
